(19)

Europäisches Patentamt

European Patent Office

Office européen des brevets

(11) **EP 4 535 464 A1**

(12) **EUROPEAN PATENT APPLICATION**
published in accordance with Art. 153(4) EPC

(43) Date of publication:
**09.04.2025 Bulletin 2025/15**

(21) Application number: **22948615.4**

(22) Date of filing: **30.06.2022**

(51) International Patent Classification (IPC):
***H01M 4/50*** (2010.01)        ***H01M 10/052*** (2010.01)
***H01M 10/058*** (2010.01)

(52) Cooperative Patent Classification (CPC):
**H01M 4/50; H01M 10/052; H01M 10/058**

(86) International application number:
**PCT/CN2022/103118**

(87) International publication number:
**WO 2024/000513 (04.01.2024 Gazette 2024/01)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Ningde Amperex Technology Limited
Ningde, Fujian 352100 (CN)**

(72) Inventors:
• YUAN, Guoxia
  Ningde, Fujian 352100 (CN)
• LANG, Ye
  Ningde, Fujian 352100 (CN)
• ZHOU, Juan
  Ningde, Fujian 352100 (CN)
• XU, Leimin
  Ningde, Fujian 352100 (CN)

(74) Representative: **Klunker IP
Patentanwälte PartG mbB
Destouchesstraße 68
80796 München (DE)**

(54) **ELECTROCHEMICAL DEVICE AND ELECTRIC DEVICE**

(57)    This application provides an electrochemical device, including a positive electrode plate. The positive electrode plate includes a positive active material layer. When the electrochemical device is in a fully discharged state, an X-ray diffraction pattern of the positive active material layer exhibits a first diffraction peak and a second diffraction peak in a range of 17.8° to 19.2°. A diffraction angle of the first diffraction peak is smaller than a diffraction angle of the second diffraction peak. The electrochemical device achieves an increased energy density and improved cycle performance.

FIG. 1

**Description**

**TECHNICAL FIELD**

This application relates to the technical field of batteries, and in particular, to an electrochemical device and an electrical device.

**BACKGROUND**

To cope with grim challenges such as global energy crisis, environmental pollution, and climate change, lithium-ion batteries have been widely used in electric vehicles and energy storage. The positive active material is one of the key materials for a lithium-ion battery. Currently, manganese metal is relatively cheap, and spinel-type $LiMn_2O_4$ is characterized by low cost, high first-cycle Coulombic efficiency, and the like. However, a conventional battery uses $LiMn_2O_4$ as a positive active material, due to the negative electrode needs to consume active lithium to form a solid electrolyte interface (SEI) film, a part of the active lithium is unable to return to the $LiMn_2O_4$ positive electrode, thereby eventually leading to the loss of the specific discharge capacity of the $LiMn_2O_4$. In addition, during cycling, the dissolution of the manganese ions destroys the SEI film, and the SEI film needs to be repaired by further consuming lithium ions. The further loss of lithium ions impairs the structural stability of the $LiMn_2O_4$, and intensifies the dissolution of manganese ions, thereby forming a vicious circle, and causing rapid fading of the cycle capacity of the lithium-ion battery.

**SUMMARY**

In view of the above situation, this application provides an electrochemical device and an electrical device to improve cycle performance of the electrochemical device.

According to a first aspect of this application, an electrochemical device is provided. The electrochemical device includes a positive electrode plate. The positive electrode plate includes a positive active material layer. When the electrochemical device is in a fully discharged state, an X-ray diffraction pattern of the positive active material layer exhibits a first diffraction peak and a second diffraction peak in a range of 17.8° to 19.2°. A diffraction angle of the first diffraction peak is smaller than a diffraction angle of the second diffraction peak. Where, the first diffraction peak close to 17.8° is a characteristic peak of the $Li_xMnO_2$ material. The second diffraction peak close to 19.2° is a characteristic peak of the spinel-type lithium manganese oxide. The existence of the $Li_xMnO_2$ material in the positive active material layer can provide active lithium for the formation and repair of the SEI film, and suppress the excessive deintercalation of lithium ions in the spinel-type lithium manganese oxide, thereby suppressing the decline in the structural stability of the spinel-type lithium manganese oxide and the excessive dissolution of manganese ions, and improving the cycle performance of the electrochemical device.

In some embodiments, a peak intensity of the first diffraction peak is $I_A$, and a peak intensity of the second diffraction peak is $I_B$, satisfying: $0.01 \leq I_A/I_B \leq 0.2$. When the peak intensities satisfy $0.01 \leq I_A/I_B \leq 0.2$, the electrochemical device achieves a relatively high capacity in addition to improved cycle performance.

In some embodiments, $0.03 \leq I_A/I_B \leq 0.12$. In this case, it is prevented that excessive active lithium exists in the system due to an overly high content of the $Li_xMnO_2$ material, and the risk of lithium plating is reduced, thereby improving the safety performance of the electrochemical device.

In some embodiments, a difference between the diffraction angle of the second diffraction peak and the diffraction angle of the first diffraction peak is less than or equal to 1°.

In some embodiments, a full-width-at-half-maximum of the first diffraction peak is $W_A$, and a full-width-at-half-maximum of the second diffraction peak is $W_B$, satisfying: $1 \leq W_A/W_B \leq 2$. In this case, the $Li_xMnO_2$ material is of good crystallinity, the erosion of the material by the electrolyte solution during cycling is reduced, the structural collapse of the material is suppressed, and in turn, the cycle performance of the electrochemical device is improved. In some embodiments, $1.05 \leq W_A/W_B \leq 1.56$.

In some embodiments, the positive active material layer contains a first lithium manganese oxide with a spinel structure.

In some embodiments, the X-ray diffraction pattern of the positive active material layer exhibits a third diffraction peak in a range of 35° to 37°, and exhibits a fourth diffraction peak in a range of 43° to 45°. Where, the third diffraction peak corresponds to the characteristic peak of the (311) crystal plane of the first lithium manganese oxide with a spinel structure. The fourth diffraction peak corresponds to the characteristic peak of the (400) crystal plane of the first lithium manganese oxide with the spinel structure.

In some embodiments, the first lithium manganese oxide contains M element and Mn element, the M element includes at least one of Al, Cr, Nb, Mg, Ti, V, Cu, Zr, Mo, La, Zn, Ga, Ru, Ag, Sn, Au, Ce, Pr, Nd, Sm, Gd, Fe, Co, Ni, W, or Y, and a molar ratio between the M element and Mn element in the first lithium manganese oxide is (0.0001 to 0.1): 1.

In some embodiments, the first lithium manganese oxide includes $Li_{x1}Mn_{y1}M_{z1}O_{4-t}A_t$, where $0.6 \leq x1 \leq 1.2$, $1.8 \leq y1 \leq 2$, $0 \leq z1 \leq 0.2$, $0 \leq t \leq 0.5$, M includes at least one of Al, Cr, Nb, Mg, Ti, V, Cu, Zr, Mo, La, Zn, Ga, Ru, Ag, Sn, Au, Ce, Pr, Nd, Sm, Gd, Fe, Co, Ni, W, or Y, and A includes at least one of S, N, F, Cl, or Br. In some embodiments, $0.6 \leq x1 \leq 1.2$, $1.8 \leq y1 \leq 2$, $0.0002 \leq z1 \leq 0.2$, and $0 \leq t \leq 0.5$.

In some embodiments, the positive active material layer further includes a second lithium manganese oxide, and the second lithium manganese oxide includes secondary particles agglomerated from layer structured primary particles. In this case, the $Li_xMnO_2$ material particles with a layer structured structure can efficiently provide active lithium for the formation and repair of the SEI film, thereby improving the cycle performance of the electrochemical device.

In some embodiments, the second lithium manganese oxide includes Al element, Mn element, and optional Q element, where the Q element includes at least one of Cr, Nb, Ti, Mg, V, Cu, Zr, Mo, La, Zn, Ga, Ru, Ag, Sn, Au, Ce, Pr, Nd, Sm, Gd, Fe, Co, Ni, W, or Y; a molar ratio between Al element and Mn element in the second lithium manganese oxide is (0.0001 to 0.1): 1; and a molar ratio between the Q element and Mn element in the second lithium manganese oxide is (0 to 0.1): 1.

In some embodiments, the second lithium manganese oxide includes $Li_{x2}Mn_{y2}Al_{z2}Q_qO_2$, where $0.1 \leq x2 \leq 1.1$, $0.9 \leq y2 \leq 1$, $0 \leq z2 \leq 0.1$, $0 \leq q \leq 0.1$, and Q includes at least one of Cr, Nb, Ti, Mg, V, Cu, Zr, Mo, La, Zn, Ga, Ru, Ag, Sn, Au, Ce, Pr, Nd, Sm, Gd, Fe, Co, Ni, W, or Y. In some embodiments, $0.1 \leq x2 \leq 1.1$, $0.9 \leq y2 \leq 1$, $0.0001 \leq z2 \leq 0.1$, and $0 \leq q \leq 0.1$.

In some embodiments, the electrochemical device further includes a negative electrode plate. The negative electrode plate includes a negative active material layer. An area of the positive active material layer is $S_c$, and an area of the negative active material layer is $S_a$. In a first test area $S_1$ of the positive active material layer, a molar content of lithium is $n_{Lic}$, and a molar content of manganese is $n_{Mn}$. In a second test area $S_2$ of the negative active material layer, a molar content of lithium is $n_{Lia}$, where $S_2 = S_1 \times S_a/S_c$, $n_{Li} = n_{Lic} + n_{Lia}$, satisfying: $0.54 \leq n_{Li}/n_{Mn} \leq 0.65$. When the $n_{Li}/n_{Mn}$ ratio falls within the above range, the risk of lithium plating is reduced and the safety performance of the electrochemical device is improved in addition to increased energy density and improved cycle performance of the electrochemical device.

In some embodiments, the electrochemical device further includes a negative electrode plate. The negative electrode plate includes a negative active material layer. An area of the positive active material layer is $S_c$, and an area of the negative active material layer is $S_a$. When a button half-cell is assembled by using the positive electrode plate with a test area $S_{tc}$ and using lithium metal as a counter electrode, a capacity of the positive electrode plate is $C_{tc}$ as tested at a current of 0.2C in a voltage range of 3 V to 4.3 V. When a button half-cell is assembled by using the negative electrode plate with a test area $S_{ta}$ and using lithium metal as a counter electrode, a capacity of the negative electrode plate is $C_{ta}$ as tested at a current of 0.2C in a voltage range of 2 V to 0.005 V, where $CB = (C_{ta} \times S_a/S_{ta})/(C_{tc} \times S_c/S_{tc})$, satisfying: $0.97 \leq CB \leq 1.35$.

In some embodiments, $1.01 \leq CB \leq 1.2$. When the CB value falls within the above range, the risk of lithium plating is reduced and the safety performance of the electrochemical device is improved in addition to improved cycle performance of the electrochemical device.

In some embodiments, the negative active material layer includes a negative active material. The negative active material includes at least one of graphite, a silicon material, a silicon-oxygen material, a silicon-carbon composite, or a silicon alloy.

According to a second aspect of this application, an electrical device is provided. The electrical device includes any one of the aforementioned electrochemical device.

**BRIEF DESCRIPTION OF DRAWINGS**

In order to describe and illustrate technical solutions of this application better, reference may be made to one or more of the following drawings. Additional details or examples used to describe the drawings are not meant to be any limitation on the scope of this application.

FIG. 1 is an X-ray diffraction pattern according to Embodiment 1 of this application;
FIG. 2 is a partial enlarged image of an X-ray diffraction pattern according to Embodiment 1 of this application; and
FIG. 3 is a cross-sectional scanning electron microscopy (SEM) image according to Embodiment 1 of this application.

**DETAILED DESCRIPTION OF EMBODIMENTS**

For ease of understanding this application, the following describes this application more comprehensively with reference to related drawings. The drawings show exemplary embodiments of this application. However, this application may be implemented in many different forms without being limited to the embodiments described herein. Rather, such embodiments are provided to enable a more thorough and comprehensive understanding of the disclosure of this application.

Unless otherwise defined, all technical and scientific terms used herein bear the same meanings as what is normally understood by a person skilled in the technical field of this application. The terms used in the specification of this application are merely intended to describe specific embodiments but not to limit this application. The term "and/or" used herein includes any and all combinations of one or more relevant items enumerated.

This application provides an electrochemical device, including a positive electrode plate. The positive electrode plate includes a positive active material layer. When the electrochemical device is in a fully discharged state, an X-ray diffraction pattern of the positive active material layer exhibits a first diffraction peak and a second diffraction peak in a range of 17.8° to 19.2°. A diffraction angle of the first diffraction peak is smaller than a diffraction angle of the second diffraction peak.

Understandably, in this application, the first diffraction peak is close to 17.8°, and is a characteristic peak of $Li_xMnO_2$ material; and the second diffraction peak is close to 19.2°, and is a characteristic peak of the spinel-type lithium manganese oxide. The existence of the $Li_xMnO_2$ material in the positive active material layer can provide active lithium for the formation and repair of the SEI film, and suppress the excessive deintercalation of lithium ions in the spinel-type lithium manganese oxide, thereby suppressing the decline in the structural stability of the spinel-type lithium manganese oxide and the dissolution of manganese ions, and improving the cycle performance of the electrochemical device.

In some embodiments, a peak intensity of the first diffraction peak is $I_A$, and a peak intensity of the second diffraction peak is $I_B$, satisfying: $0.01 \leq I_A/I_B \leq 0.2$. When the peak intensities satisfy $0.01 \leq I_A/I_B \leq 0.2$, the electrochemical device achieves a relatively high capacity in addition to improved cycle performance. Understandably, in this application, the values of $I_A/I_B$ include, but are not limited to, 0.01, 0.02, 0.03, 0.04, 0.05, 0.06, 0.07, 0.08, 0.09, 0.1, 0.12, 0.14, 0.16, 0.18, or 0.2.

In some embodiments, $0.03 \leq I_A/I_B \leq 0.12$. In this case, it is prevented that excessive active lithium exists in the system due to an overly high content of the $Li_xMnO_2$ material, and the risk of lithium plating is reduced, thereby improving the safety performance of the electrochemical device.

In some embodiments, a difference between the diffraction angle of the second diffraction peak and the diffraction angle of the first diffraction peak is less than or equal to 1°. Understandably, in this application, the differences between the diffraction angle of the second diffraction peak and the diffraction angle of the first diffraction peak include, but are not limited to, 0.1°, 0.2°, 0.3°, 0.4°, 0.5°, 0.6°, 0.7°, 0.8°, 0.9°, and 1.0°.

In some embodiments, a full-width-at-half-maximum of the first diffraction peak is $W_A$, and a full-width-at-half-maximum of the second diffraction peak is $W_B$, satisfying: $1 \leq W_A/W_B \leq 2$. In this case, the $Li_xMnO_2$ material is of good crystallinity, the erosion of the material by the electrolyte solution during cycling is reduced, the structural collapse of the material is suppressed, and in turn, the cycle performance of the electrochemical device is improved. Understandably, in this application, the values of $W_A/W_B$ include, but are not limited to, 1.0, 1.1, 1.2, 1.3, 1.4, 1.5, 1.6, 1.7, 1.8, 1.9, or 2.0. In some embodiments, $1.05 \leq W_A/W_B \leq 1.56$.

In some embodiments, the positive active material layer contains a first lithium manganese oxide with a spinel structure.

In some embodiments, the X-ray diffraction pattern of the positive active material layer exhibits a third diffraction peak in a range of 35° to 37°, and exhibits a fourth diffraction peak in a range of 43° to 45°. Where, the third diffraction peak corresponds to the characteristic peak of the (311) crystal plane of the first lithium manganese oxide with a spinel structure. The fourth diffraction peak corresponds to the characteristic peak of the (400) crystal plane of the first lithium manganese oxide with the spinel structure.

In some embodiments, the first lithium manganese oxide contains M element and Mn element, the M element includes at least one of Al, Cr, Nb, Mg, Ti, V, Cu, Zr, Mo, La, Zn, Ga, Ru, Ag, Sn, Au, Ce, Pr, Nd, Sm, Gd, Fe, Co, Ni, W, or Y, and a molar ratio between the M element and Mn element in the first lithium manganese oxide is (0.0001 to 0.1): 1. Understandably, in this application, the molar ratios between the M element and Mn element in the first lithium manganese oxide include, but are not limited to, 0.0001: 1, 0.0002: 1, 0.0005: 1, 0.001: 1, 0.002: 1, 0.003: 1, 0.005: 1, 0.01: 1, 0.015: 1, 0.02: 1, 0.025: 1, 0.03: 1, 0.05: 1, 0.06: 1, 0.08: 1, 0.09: 1, and 0.1: 1.

In some embodiments, the first lithium manganese oxide includes $Li_{x1}Mn_{y1}M_{z1}O_{4-t}A_t$, where $0.6 \leq x1 \leq 1.2$, $1.8 \leq y1 \leq 2$, $0 \leq z1 \leq 0.2$, $0 \leq t \leq 0.5$, M includes at least one of Al, Cr, Nb, Mg, Ti, V, Cu, Zr, Mo, La, Zn, Ga, Ru, Ag, Sn, Au, Ce, Pr, Nd, Sm, Gd, Fe, Co, Ni, W, or Y, and A includes at least one of S, N, F, Cl, or Br. In some embodiments, $0.6 \leq x1 \leq 1.2$, $1.8 \leq y1 \leq 2$, $0.0002 \leq z1 \leq 0.2$, and $0 \leq t \leq 0.5$.

In some embodiments, the positive active material layer further includes a second lithium manganese oxide, and the second lithium manganese oxide includes secondary particles agglomerated from layer structured primary particles. In this case, the $Li_xMnO_2$ material particles with a layer structured structure can efficiently provide active lithium for the formation and repair of the SEI film, thereby improving the cycle performance of the electrochemical device.

In some embodiments, the second lithium manganese oxide includes Al element, Mn element, and optional Q element, where the Q element includes at least one of Cr, Nb, Ti, Mg, V, Cu, Zr, Mo, La, Zn, Ga, Ru, Ag, Sn, Au, Ce, Pr, Nd, Sm, Gd, Fe, Co, Ni, W, or Y; a molar ratio between Al element and Mn element in the second lithium manganese oxide is (0.0001 to 0.1): 1; and a molar ratio between the Q element and Mn element in the second lithium manganese oxide is (0 to 0.1): 1.

Understandably, in this application, the molar ratios between Al element and Mn element in the second lithium manganese oxide include, but are not limited to, 0.0001: 1, 0.0002: 1, 0.0005: 1, 0.001: 1, 0.002: 1, 0.003: 1, 0.005: 1, 0.01: 1, 0.015: 1, 0.02: 1, 0.04: 1, 0.06: 1, 0.08: 1, and 0.1: 1.

Understandably, in this application, the molar ratios between the Q element and Mn element in the second lithium manganese oxide include, but are not limited to, 0.0001: 1, 0.0002: 1, 0.0005: 1, 0.001: 1, 0.002: 1, 0.003: 1, 0.005: 1, 0.01: 1, 0.015: 1, 0.02: 1, 0.04: 1, 0.06: 1, 0.08: 1, and 0.1: 1.

In some embodiments, the second lithium manganese oxide includes $Li_{x2}Mn_{y2}Al_{z2}Q_qO_2$, where $0.1 \leq x2 \leq 1.1$, $0.9 \leq y2 \leq 1$, $0 \leq z2 \leq 0.1$, $0 \leq q \leq 0.1$, and Q includes at least one of Cr, Nb, Ti, Mg, V, Cu, Zr, Mo, La, Zn, Ga, Ru, Ag, Sn, Au, Ce, Pr, Nd, Sm, Gd, Fe, Co, Ni, W, or Y. In some embodiments, $0.1 \leq x2 \leq 1.1$, $0.9 \leq y2 \leq 1$, $0.0001 \leq z2 \leq 0.1$, and $0 \leq q \leq 0.1$.

In some embodiments, the electrochemical device further includes a negative electrode plate. The negative electrode plate includes a negative active material layer. An area of the positive active material layer is $S_c$, and an area of the negative active material layer is $S_a$. In a first test area $S_1$ of the positive active material layer, a molar content of lithium is $n_{Lic}$, and a molar content of manganese is $n_{Mn}$. In a second test area $S_2$ of the negative active material layer, a molar content of lithium is $n_{Lia}$, where $S_2 = S_1 \times S_a/S_c$, $n_{Li} = n_{Lic} + n_{Lia}$, satisfying: $0.54 \leq n_{Li}/n_{Mn} \leq 0.65$.

In this application, when the $n_{Li}/n_{Mn}$ ratio falls within the above range, the risk of lithium plating is reduced and the safety performance of the electrochemical device is improved in addition to increased energy density and improved cycle performance of the electrochemical device.

In some embodiments, the electrochemical device further includes a negative electrode plate. The negative electrode plate includes a negative active material layer. An area of the positive active material layer is $S_c$, and an area of the negative active material layer is $S_a$. When a button half-cell is assembled by using the positive electrode plate with a test area $S_{tc}$ and using lithium metal as a counter electrode, a capacity of the positive electrode plate is $C_{tc}$ as tested at a current of 0.2C in a voltage range of 3 V to 4.3 V. When a button half-cell is assembled by using the negative electrode plate with a test area $S_{ta}$ and using lithium metal as a counter electrode, a capacity of the negative electrode plate is $C_{ta}$ as tested at a current of 0.2C in a voltage range of 2 V to 0.005 V, where $CB = (C_{ta} \times S_a/S_{ta})/(C_{tc} \times S_c/S_{tc})$, satisfying: $0.97 \leq CB \leq 1.35$. Understandably, in this application, the values of CB include, but are not limited to, 0.97, 1.0, 1.01, 1.05, 1.08, 1.10, 1.12, 1.15, 1.20, 1.25, 1.30, or 1.35.

In some embodiments, $1.01 \leq CB \leq 1.2$. In this application, when the CB value falls within the above range, the risk of lithium plating is reduced and the safety performance of the electrochemical device is improved in addition to improved cycle performance of the electrochemical device.

In some embodiments, the positive active material layer further includes a conductive agent and a binder. In some embodiments, the binder includes, but is not limited to: polyvinyl alcohol, hydroxypropyl cellulose, diacetyl cellulose, polyvinyl chloride, carboxylated polyvinyl chloride, polyvinylpyrrolidone, polyurethane, polytetrafluoroethylene, polyvinylidene difluoride, styrene-butadiene rubber, acrylated styrene-butadiene rubber, or the like. In some embodiments, the conductive agent includes, but is not limited to, a carbon-based material, a metal-based material, a conductive polymer, or a mixture thereof. In some embodiments, the carbon-based material is selected from graphite, carbon black, acetylene black, Ketjen black, carbon nanotubes, carbon fibers, graphene, or any combination thereof. In some embodiments, the metal-based material is selected from metal powder, metal fibers, copper, nickel, aluminum, or silver. In some embodiments, the conductive polymer is a polyphenylene derivative.

In some embodiments, the positive electrode plate further includes a positive current collector. The positive current collector may be a metal foil or a composite current collector. For example, the positive current collector may be an aluminum foil. The composite current collector may be formed by disposing a metal material (copper, copper alloy, nickel, nickel alloy, titanium, titanium alloy, silver, silver alloy, and the like) on a polymer substrate.

In some embodiments, the negative active material layer includes a negative active material. The negative active material includes at least one of graphite, a silicon material, a silicon-oxygen material, a silicon-carbon composite, or a silicon alloy.

In some embodiments, the negative active material layer further includes a conductive agent and a binder. In some embodiments, the binder includes at least one of polyvinylidene fluoride, poly(vinylidene fluoride-co-hexafluoropropylene), polyamide, polyacrylonitrile, polyacrylate, polyacrylic acid, polyacrylic acid sodium salt, sodium carboxymethyl cellulose, polyvinylpyrrolidone, polyvinyl ether, polytetrafluoroethylene, polyhexafluoropropylene, or styrene-butadiene rubber. In some embodiments, the conductive agent includes at least one of conductive carbon black, acetylene black, carbon nanotubes, Ketjen black, carbon fibers, or graphene.

In some embodiments, the negative electrode plate further includes a negative current collector. The negative current collector may be a copper foil, nickel foil, stainless steel foil, titanium foil, foamed nickel, foamed copper, a conductive-metal-clad polymer substrate, or any combination thereof.

The electrochemical device according to this application further includes an electrolyte solution. The electrolyte solution includes a lithium salt and a nonaqueous solvent.

In some embodiments, the lithium salt is at least one selected from $LiPF_6$, $LiBF_4$, $LiAsF_6$, $LiClO_4$, $LiB(C_6H_5)_4$, $LiCH_3SO_3$, $LiCF_3SO_3$, $LiN(SO_2CF_3)_2$, $LiC(SO_2CF_3)_3$, $LiSiF_6$, LiBOB, and lithium difluoroborate. For example, the lithium salt may be $LiPF_6$.

The nonaqueous solvent may be a carbonate ester compound, a carboxylate ester compound, an ether compound, another organic solvent, or any combination thereof.

The carbonate compound may be a chain carbonate compound, a cyclic carbonate compound, a fluorocarbonate compound, or any combination thereof.

Examples of the chain carbonate compound are dimethyl carbonate (DMC), diethyl carbonate (DEC), dipropyl carbonate (DPC), methyl propyl carbonate (MPC), ethylene propyl carbonate (EPC), ethyl methyl carbonate (EMC), or any combination thereof. Examples of the cyclic carbonate compound are ethylene carbonate (EC), propylene carbonate (PC), butylene carbonate (BC), vinyl ethylene carbonate (VEC), or any combination thereof. Examples of the fluorocarbonate compound are fluoroethylene carbonate (FEC), 1, 2-difluoroethylene carbonate, 1,1-difluoroethylene carbonate, 1,1,2-trifluoroethylene carbonate, 1,1,2,2-tetrafluoroethylene carbonate, 1-fluoro-2-methyl ethylene, 1-fluoro-1-methyl ethylene carbonate, 1,2-difluoro-1-methyl ethylene carbonate, 1,1,2-trifluoro-2-methyl ethylene carbonate, trifluoromethyl ethylene carbonate, or any combination thereof.

Examples of the carboxylate compound are methyl formate, methyl acetate, ethyl acetate, n-propyl acetate, tert-butyl acetate, methyl propionate, ethyl propionate, propyl propionate, $\gamma$-butyrolactone, decanolactone, valerolactone, mevalonolactone, caprolactone, or any combination thereof.

Examples of the ether compound are dibutyl ether, tetraglyme, diglyme, 1,2-dimethoxyethane, 1,2-diethoxyethane, ethoxy-methoxyethane, 2-methyltetrahydrofuran, tetrahydrofuran, or any combination thereof.

Examples of the other organic solvent are dimethyl sulfoxide, 1,2-dioxolane, sulfolane, methyl sulfolane, 1,3-dimethyl-2-imidazolidinone, N-methyl-2-pyrrolidone, formamide, dimethylformamide, acetonitrile, trimethyl phosphate, triethyl phosphate, trioctyl phosphate, phosphate ester and any combination thereof.

In some embodiments, the electrochemical device includes a separator disposed between the positive electrode plate and the negative electrode plate to prevent a short circuit. The material and the shape of the separator applicable to an embodiment of this application are not particularly limited, and may be based on any technology disclosed in the prior art. In some embodiments, the separator includes a polymer or an inorganic compound or the like formed from a material that is stable to the electrolyte solution disclosed in this application. For example, the separator may include a substrate layer and a surface treatment layer. The substrate layer is a non-woven fabric, film or composite film, each being of a porous structure. The material of the substrate layer includes at least one of polyethylene, polypropylene, polyethylene terephthalate, or polyimide. Specifically, the material of the substrate layer may be a polypropylene porous film, a polyethylene porous film, a polypropylene non-woven fabric, a polyethylene non-woven fabric, or a polypropylene-polyethylene-polypropylene porous composite film. The surface treatment layer is disposed on at least one surface of the substrate layer. The surface treatment layer may be a polymer layer or an inorganic compound layer, or a layer formed by mixing a polymer and an inorganic compound. The inorganic compound layer includes inorganic particles and a binder. The inorganic particles include at least one of aluminum oxide, silicon oxide, magnesium oxide, titanium oxide, hafnium dioxide, tin oxide, ceria, nickel oxide, zinc oxide, calcium oxide, zirconium oxide, yttrium oxide, silicon carbide, boehmite, aluminum hydroxide, magnesium hydroxide, calcium hydroxide, or barium sulfate. The binder includes at least one of polyvinylidene fluoride, vinylidene poly(fluoride-co-hexafluoropropylene), polyamide, polyacrylonitrile, polyacrylate, polyacrylic acid, polyacrylic acid sodium salt, polyvinylpyrrolidone, polyvinyl ether, polymethyl methacrylate, polytetrafluoroethylene, or polyhexafluoropropylene. The polymer layer includes a polymer. The material of the polymer includes at least one of polyamide, polyacrylonitrile, an acrylate polymer, polyacrylic acid, polyacrylic acid sodium salt, polyvinylpyrrolidone, polyvinyl ether, polyvinylidene fluoride, or poly(vinylidene fluoride-co-hexafluoropropylene).

According to some embodiments of this application, the electrochemical device according to this application includes, but is not limited to: a primary battery or a secondary battery of any type. In some embodiments, the electrochemical device is a lithium secondary battery. In some embodiments, the lithium secondary battery includes, but is not limited to, a lithium metal secondary battery, a lithium-ion secondary battery, a lithium polymer secondary battery, or a lithium-ion polymer secondary battery.

This application further provides an electrical device. The electrical device includes the above mentioned electrochemical device.

In some embodiments, the electrical device includes, but is not limited to, a laptop computer, pen-inputting computer, e-book player, portable phone, portable fax machine, portable photocopier, portable printer, stereo headset, video recorder, handheld cleaner, portable CD player, electronic notepad, calculator, portable voice recorder, radio, backup power supply, electric vehicle, motorcycle, electric bicycle, lighting appliance, toy, game console, watch, electric tool, camera, large household storage battery, lithium-ion capacitor, or the like.

The following describes this application in further detail with reference to specific embodiments. Unless otherwise expressly specified, all raw materials used in the following embodiments are commercially available products.

**Embodiment 1**

I. Preparing a positive active material

(1) Placing Mn(OOH) in a corundum crucible, heating the crucible to 500 °C at a heating rate of 5 °C/min in an air atmosphere, and keeping the temperature constant for 1 hour to obtain anhydrous $Mn_3O_4$; Weighing out anhydrous $Mn_3O_4$ and LiOH at a molar ratio of 1.05: 1 between Li and Mn, and adding nano $Al_2O_3$ at a molar ratio of 0.03: 1 between Al and Mn. Mixing well by using a sand mill to obtain a mixture precursor. Placing the precursor into a corundum crucible, introducing nitrogen at a rate of 2 $m^3$/h, increasing the temperature to 940 °C at a heating rate of 5 °C/min, and keeping the temperature constant for 10 hours. Cooling down the mixture naturally to a room temperature to obtain a layer structured $LiMnO_2$ material.

(2) Weighing out $Li_2CO_3$ and $MnO_2$ at a molar ratio of 0.56: 1 between Li and Mn, and adding $Al_2O_3$ and $Nb_2O_5$ at a molar ratio of 0.05: 1 between Al and Mn and at a molar ratio of 0.01: 1 between Nb and Mn. Stirring the constituents in a high-speed mixer at a rotation speed of 300 r/min for 20 minutes to obtain a mixture. Putting the mixture into an air kiln, and increasing the temperature to 790 °C at a speed of 5 °C/min, and keeping the temperature constant for 24 hours. Naturally cooling the mixture, and then taking it out. Passing the mixture through a 300-mesh sieve to obtain spinel-type lithium manganese oxide.

(3) Mixing well the spinel-type lithium manganese oxide and $LiMnO_2$ at a mass ratio of 92: 8, and sintering the mixture in a 200 °C air atmosphere for 2 hours to obtain a positive active material.

II. Preparing a lithium-ion battery

Preparing a positive electrode plate: Mixing a positive active material, Super P as a conductive agent, and polyvinylidene difluoride as a binder at a mass ratio of 96: 2.4: 1.6, adding N-methyl-pyrrolidone (NMP), and stirring the mixture well with a vacuum mixer to obtain a positive electrode slurry, in which a solid content is 75 wt%. Coating one surface of a 10 $\mu$m-thick positive current collector aluminum foil with the positive electrode slurry evenly, and drying the aluminum foil at 85 °C to obtain a positive electrode plate coated with a 110 $\mu$m-thick positive active material layer on a single side. Repeating the foregoing steps on the other surface of the aluminum foil to obtain a positive electrode plate coated with the positive active material layer on both sides. Subsequently, performing cold-pressing, cutting, and slitting, and drying the electrode plate in an 85 °C vacuum environment for 4 hours to obtain a positive electrode plate of 74 mm $\times$ 867 mm in size.

Preparing a negative electrode plate: Mixing artificial graphite as a negative active material, Super P as a conductive agent, sodium carboxymethyl cellulose (CMC) as a thickener, and styrene-butadiene rubber (SBR) as a binder at a mass ratio of 96.4: 1.5: 0.5: 1.6. Adding deionized water, and mixing well with a vacuum mixer to obtain a negative electrode slurry in which the solid content is 70 wt%. Coating one surface of a 10-$\mu$m thick negative current collector copper foil with the negative electrode slurry evenly, and drying the copper foil at 85 °C to obtain a negative electrode plate coated with a 79 $\mu$m-thick negative active material layer on a single side. Repeating the foregoing steps on the other surface of the copper foil to obtain a negative electrode plate coated with the negative active material layer on both sides. Subsequently, performing cold-pressing, cutting, and slitting, and drying the electrode plate in a 120 °C vacuum environment for 12 hours to obtain a negative electrode plate of 79 mm $\times$ 972 mm in size.

Preparing an electrolyte solution: Mixing diethyl carbonate (DEC) and ethylene carbonate (EC) at a mass ratio of 57.5: 30 in an argon atmosphere glovebox with a water content less than 10 ppm to obtain a base solvent, and then adding a lithium salt $LiPF_6$ into the base solvent to dissolve, and stirring well to obtain an electrolyte solution. Based on the mass of the electrolyte solution, the mass percent of $LiPF_6$ is 12.5%, and the remaining constituent is the base solvent.

Preparing a separator: Mixing polyvinylidene fluoride and aluminum oxide at a mass ratio of 1: 8, adding the mixture into deionized water, and stirring well to obtain a coating slurry in which the solid content is 50 wt%. Coating one surface of a 5 $\mu$m-thick porous PE film with the coating slurry evenly, and drying the film at 85 °C to obtain a separator coated with a 5 $\mu$m-thick coating layer on a single side.

Stacking the above-prepared positive electrode plate, separator, and negative electrode plate in sequence in such a way that the separator is located between the positive electrode plate and the negative electrode plate, with the coating layer facing the positive electrode plate. Winding the stacked structure to obtain an electrode assembly. Putting the electrode assembly into an aluminum plastic film pocket, drying the pocket, and then injecting the electrolyte solution. Performing steps such as vacuum sealing, static standing, chemical formation, degassing, and edge trimming to obtain a lithium-ion battery.

**Embodiment 2**

Steps are identical to those in Embodiment 1 except that the mass ratio between the spinel-type lithium manganese oxide and $LiMnO_2$ in step (3) is adjusted to 95: 5 and the thickness of the positive active material layer on a single side is adjusted to 112 $\mu$m.

**Embodiment 3**

Steps are identical to those in Embodiment 1 except that the mass ratio between the spinel-type lithium manganese oxide and $LiMnO_2$ in step (3) is adjusted to 90: 10.

**Embodiment 4**

Steps are identical to those in Embodiment 1 except that the mass ratio between the spinel-type lithium manganese oxide and $LiMnO_2$ in step (3) is adjusted to 85: 15.

**Embodiment 5**

Steps are identical to those in Embodiment 1 except that the mass ratio between the spinel-type lithium manganese oxide and $LiMnO_2$ in step (3) is adjusted to 80: 20 and the thickness of the positive active material layer on a single side is adjusted to 111 $\mu$m.

**Embodiment 6**

Steps are identical to those in Embodiment 1 except that the nano $Al_2O_3$ is added at a molar ratio of 0.1: 1 between Al and Mn in step (1).

**Embodiment 7**

Steps are identical to those in Embodiment 1 except that the nano $Al_2O_3$ is added at a molar ratio of 0.06: 1 between Al and Mn in step (1).

**Embodiment 8**

Steps are identical to those in Embodiment 1 except that the nano $Al_2O_3$ is added at a molar ratio of 0.02: 1 between Al and Mn in step (1).

**Embodiment 9**

Steps are identical to those in Embodiment 1 except that the nano $Al_2O_3$ is added at a molar ratio of 0.01: 1 between Al and Mn in step (1).

**Embodiment 10**

Steps are identical to those in Embodiment 1 except that the nano $Al_2O_3$ is added at a molar ratio of 0.0001: 1 between Al and Mn in step (1).

**Embodiment 11**

Steps are identical to those in Embodiment 1 except that the thickness of the negative active material layer on a single side is adjusted to 74 $\mu$m.

**Embodiment 12**

Steps are identical to those in Embodiment 1 except that the thickness of the negative active material layer on a single side is adjusted to 82 $\mu$m.

## Embodiment 13

Steps are identical to those in Embodiment 1 except that the thickness of the negative active material layer on a single side is adjusted to 87 $\mu$m.

## Embodiment 14

Steps are identical to those in Embodiment 1 except that the thickness of the negative active material layer on a single side is adjusted to 72 $\mu$m.

## Embodiment 15

Steps are identical to those in Embodiment 1 except that the thickness of the negative active material layer on a single side is adjusted to 95 $\mu$m.

## Comparative Embodiment 1

The differences are that a process of preparing a positive active material is: Weighing out $Li_2CO_3$ and $MnO_2$ at a molar ratio of 0.56: 1 between Li and Mn, and adding $Al_2O_3$ and $Nb_2O_5$ at a molar ratio of 0.05: 1 between Al and Mn and at a molar ratio of 0.01: 1 between Nb and Mn. Stirring the constituents in a high-speed mixer at a rotation speed of 300 r/min for 20 minutes to obtain a mixture. Putting the mixture into an air kiln, and increasing the temperature to 790 °C at a speed of 5 °C/min, and keeping the temperature constant for 24 hours. Naturally cooling the mixture, and then taking it out. Passing the mixture through a 300-mesh sieve to obtain spinel-type lithium manganese oxide; and the thickness of the positive active material layer on a single side is adjusted to 118 $\mu$m. Other steps are identical to those in Embodiment 1.

## Characterization and effect verification test

### (1) XRD test

Fully discharging a lithium-ion battery to a voltage of 2.8 V, disassembling the lithium-ion battery, taking out the positive electrode plate, immersing the positive electrode plate in dimethyl carbonate (DMC) for 30 minutes to remove the electrolyte solution and byproducts from the surface of the positive electrode plate, and then drying the positive electrode plate in a ventilating cabinet for 4 hours. Scraping a positive active material layer off with a scraper to obtain a positive active material layer powder, and then putting the positive active material layer powder into a specimen holder of an XRD test instrument (Model: Bruker D8). Scanning at speed of 2°/min in a scan angle range of 10° to 90° to obtain an XRD diffraction pattern.

Reading, in the XRD diffraction pattern, the peak intensity $I_A$ of the first diffraction peak located near 17.8° in the range of 17.8° to 19.2°, the full-width-at-half-maximum $W_A$ of the first diffraction peak, the peak intensity $I_B$ of the second diffraction peak located near 17.8°, the full-width-at-half-maximum $W_B$ of the second diffraction peak, and calculating the values of $I_A/I_B$ and $W_A/W_B$.

### (2) Morphology test method

Cleaning a positive electrode plate in a fully discharged state by using DMC, and then drying the electrode plate at 60 °C for 2 hours. Cutting the positive electrode plate along the thickness direction of the positive electrode plate by use of an ion beam cross-section polisher to obtain a flat and even cross-section of the positive electrode plate. Testing the cross-section by using a scanning electron microscope (SEM) to determine the morphology of particles.

### (3) Testing the content of elements such as Al and Mn

Using an elemental analyzer (EDS) to test selected particles in the cross-section of the electrode plate to determine the content of elements such as Al and Mn, and calculating the ratio.

### (4) $n_{Li}/n_{Mn}$ test

Fully discharging a lithium-ion battery to a voltage of 2.8 V and then disassembling the battery. Rinsing the inside of the battery by using an organic solvent, and collecting the organic solvent. Oven-drying the electrode plate, and measuring the area of the positive active material layer denoted as $S_c$ and the area of the negative active material layer

denoted as $S_a$. Taking a positive electrode plate coated by a positive active material layer with an area of $S_1$. Collecting the positive active material layer in the positive electrode plate. Burning away the binder and the conductive agent in the positive active material layer, and then weighing the remaining powder to obtain a mass $m_1$. Measuring, by using an inductively coupled plasma-atomic emission spectrometer (ICP-AES), the mass percent of lithium in the powder, denoted as $x_1$, and the mass percent of Mn, denoted as y. Therefore, the molar content of lithium in the positive electrode plate is $n_{Lic}$ = $x_1 \times m_1/M_{Li}$, and the molar content of Mn is $n_{Mn} = m_1 \times y/M_{Mn}$, where $M_{Li}$ is the molar mass of Li, and $M_{Mn}$ is the molar mass of Mn.

Taking a negative electrode plate coated by a negative active material layer with an area of $S_2$, where $S_2 = S_1 \times S_a/S_c$. Collecting the negative active material layer in the negative electrode plate. Burning away the binder in the negative active material layer, and then weighing the remaining powder to obtain a mass $m_2$. Measuring the mass percent of lithium in the powder by using an ICP-AES, denoted as $x_2$. Therefore, the molar content of lithium in the negative electrode plate is $n_{Lia} = x_2 \times m_2/M_{Li}$. Therefore, $n_{Li} = n_{Lic} + n_{Lia}$.

(5) CB test

Assembling a button half-cell by using a positive electrode plate with a test area $S_{tc}$ and using lithium metal as a counter electrode, and measuring the capacity of the positive electrode plate, denoted as $C_{tc}$. Assembling a button half-cell by using a negative electrode plate with a test area $S_{ta}$ and using lithium metal as a counter electrode, and measuring the capacity of the negative electrode plate, denoted as $C_{ta}$. Therefore, CB = $(C_{tc} \times S_c/S_{tc})/(C_{ta} \times S_a/S_{ta})$. The voltage test range of the negative electrode plate is 2 V to 0.005 V. The voltage test range of the positive electrode plate is 3 V to 4.3 V. The current is 0.2C, where 1C is equal to 100 mAh/g.

6. Testing the gravimetric discharge capacity at a temperature of 25 °C and a current of 0.2C

Charging a lithium-ion battery at 25 °C at a constant current of 0.5C until the voltage reaches 4.2 V, and then charging the battery at a constant voltage of 4.2 V until the current drops to 0.05C, and then discharging the lithium-ion battery at a constant current of 0.2C until the voltage drops to 2.8 V. Recording the discharge capacity as $D_{01}$.

Calculating the gravimetric discharge capacity D as: $D = D_{01}/m$, in units of mAh/g, where m is the mass of the positive active material.

(7) Testing the cycle performance

25 °C 500th-cycle capacity retention rate

Charging a lithium-ion battery at 25 °C at a constant current of 0.5C until the voltage reaches 4.2 V, and then charging the battery at a constant voltage until the current drops to 0.05C. Leaving the battery to stand for 5 minutes. Subsequently, discharging the battery at a constant current of 1C until the voltage drops to 2.8 V, thereby completing one charge-discharge cycle. Recording the discharge capacity at this time as $D_{02}$. Repeating the above steps to complete 500 cycles of the lithium-ion battery. Measuring the discharge capacity of the 500th cycle, denoted as $D_2$. 500th-cycle capacity retention rate cycled at 25 °C (%) = $D_2/D_{02} \times 100\%$.

55 °C 200th-cycle capacity retention rate

Charging a lithium-ion battery at 55 °C at a constant current of 0.5C until the voltage reaches 4.2 V, and then charging the battery at a constant voltage until the current drops to 0.05C. Leaving the battery to stand for 5 minutes. Subsequently, discharging the battery at a constant current of 1C until the voltage drops to 2.8 V, thereby completing one charge-discharge cycle. Recording the discharge capacity at this time as $D_{03}$. Repeating the above steps to complete 200 cycles of the lithium-ion battery. Measuring the discharge capacity of the 200th cycle, denoted as $D_3$. 200th-cycle capacity retention rate cycled at 55 °C (%) = $D_3/D_{03} \times 100\%$.

(8) Lithium plating test

Charging a lithium-ion battery at 0 °C at a constant current of 0.5C until the voltage reaches 4.2 V, and then charging the battery at a constant voltage until the current drops to 0.05C. Leaving the battery to stand for 5 minutes, and then discharging the battery at a constant current of 1C until the voltage drops to 2.8 V, thereby completing one charge-discharge cycle. Repeating the above steps until the battery is fully charged at the end of 10 cycles. Disassembling the battery, analyzing the surface of the negative electrode plate, and determining the percentage of the lithium plating area in the entire area of the negative electrode plate.

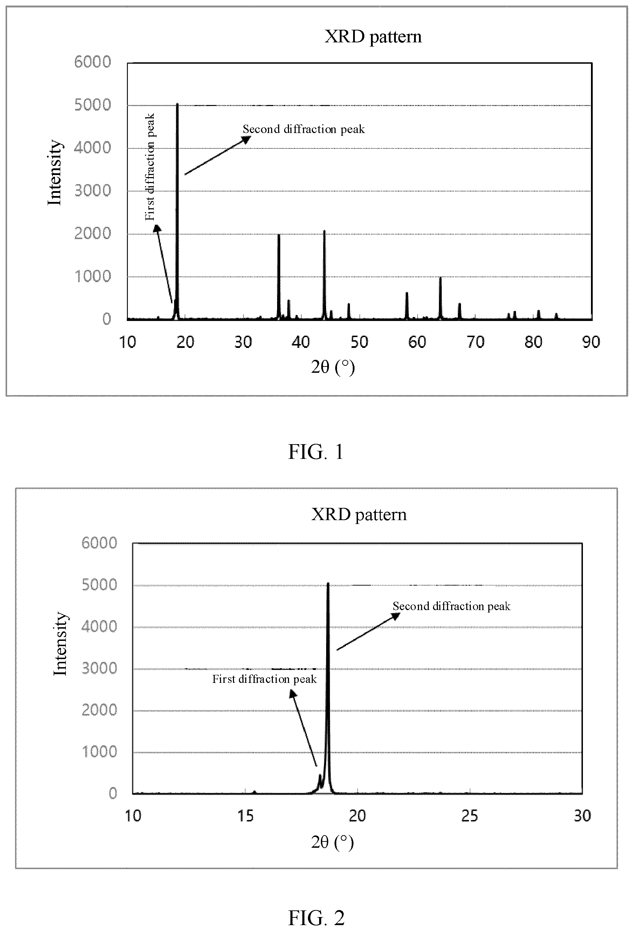

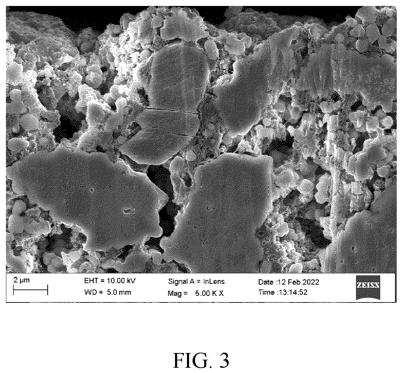

When the lithium-ion battery in Embodiment 1 is fully discharged, the X-ray diffraction pattern corresponding to the positive active material layer is shown in FIG. 1 to FIG. 2. The cross-sectional SEM image is shown in FIG. 3.

The characterization and effect verification experiment results of Embodiments 1 to 15 and Comparative Embodiment 1 are shown in Table 1.

**Table 1 (To Be Continued)**

| | Molar ratio between Al and Mn in LiMnO$_2$ | First diffraction peak position (°) | Second diffraction peak position (°) | $I_A/I_B$ | $W_A/W_B$ | $n_{Li}/n_{Mn}$ |
|---|---|---|---|---|---|---|
| Embodiment 1 | 0.03: 1 | 18.29 | 18.66 | 0.06 | 1.23 | 0.593 |
| Embodiment 2 | 0.03: 1 | 18.28 | 18.68 | 0.03 | 1.24 | 0.58 |
| Embodiment 3 | 0.03: 1 | 18.30 | 18.67 | 0.09 | 1.23 | 0.602 |
| Embodiment 4 | 0.03: 1 | 18.30 | 18.66 | 0.12 | 1.24 | 0.624 |
| Embodiment 5 | 0.03: 1 | 18.29 | 18.66 | 0.19 | 1.23 | 0.645 |
| Embodiment 6 | 0.1: 1 | 18.21 | 18.65 | 0.06 | 1.05 | 0.595 |
| Embodiment 7 | 0.06: 1 | 18.23 | 18.65 | 0.06 | 1.12 | 0.594 |
| Embodiment 8 | 0.02: 1 | 18.31 | 18.67 | 0.05 | 1.34 | 0.592 |
| Embodiment 9 | 0.01: 1 | 18.32 | 18.67 | 0.05 | 1.56 | 0.591 |
| Embodiment 10 | 0.0001: 1 | 18.39 | 18.71 | 0.05 | 1.98 | 0.589 |
| Embodiment 11 | 0.03: 1 | 18.29 | 18.66 | 0.06 | 1.23 | 0.593 |
| Embodiment 12 | 0.03: 1 | 18.29 | 18.66 | 0.06 | 1.23 | 0.593 |
| Embodiment 13 | 0.03: 1 | 18.29 | 18.66 | 0.06 | 1.23 | 0.593 |
| Embodiment 14 | 0.03: 1 | 18.29 | 18.66 | 0.06 | 1.23 | 0.593 |
| Embodiment 15 | 0.03: 1 | 18.29 | 18.66 | 0.06 | 1.23 | 0.593 |
| Comparative Embodiment 1 | / | / | 18.73 | / | / | 0.558 |

**Table 1 (Continued)**

| | CB | Gravimetric capacity (mAh/g) | 25 °C 500th-cycle capacity retention rate | 55 °C 200th-cycle capacity retention rate | Lithium plating area |
|---|---|---|---|---|---|
| Embodiment 1 | 1.08 | 112.9 | 91.2% | 73.9% | 4.9% |
| Embodiment 2 | 1.08 | 111.0 | 90.3% | 72.5% | 4.7% |
| Embodiment 3 | 1.08 | 112.7 | 92.4% | 75.0% | 5.1% |
| Embodiment 4 | 1.08 | 112.5 | 93.1% | 75.5% | 8.6% |
| Embodiment 5 | 1.08 | 112.2 | 94.0% | 76.1% | 11.3% |
| Embodiment 6 | 1.08 | 112.8 | 92.5% | 76.3% | 4.9% |
| Embodiment 7 | 1.08 | 112.8 | 91.8% | 74.8% | 4.9% |
| Embodiment 8 | 1.08 | 112.7 | 90.7% | 72.8% | 4.9% |
| Embodiment 9 | 1.08 | 112.3 | 90.1% | 72.4% | 4.9% |
| Embodiment 10 | 1.08 | 111.9 | 89.6% | 71.3% | 4.9% |
| Embodiment 11 | 1.01 | 112.2 | 92.3% | 74.8% | 9.7% |
| Embodiment 12 | 1.12 | 113.1 | 90.8% | 72.5% | 4.7% |
| Embodiment 13 | 1.20 | 113.2 | 90.1% | 71.7% | 4.3% |
| Embodiment 14 | 0.97 | 110.8 | 92.8% | 75.3% | 13.2% |

(continued)

|  | CB | Gravimetric capacity (mAh/g) | 25 °C 500th-cycle capacity retention rate | 55 °C 200th-cycle capacity retention rate | Lithium plating area |
|---|---|---|---|---|---|
| Embodiment 15 | 1.31 | 113.3 | 89.2% | 71.3% | 2.1% |
| Comparative Embodiment 1 | 1.08 | 104.9 | 88.3% | 71.0% | 4.5% |

As can be seen from Table 1, in Embodiments 1 to 15, the X-ray diffraction pattern of the positive active material layer exhibits a first diffraction peak and a second diffraction peak in the range of 17.8° to 19.2°, and therefore, the gravimetric discharge capacity is improved significantly, and the cycle performance is improved. That is because the existence of the $Li_xMnO_2$ material in the positive active material layer can provide active lithium for the formation and repair of the SEI film, and suppress the excessive deintercalation of lithium ions in the spinel-type lithium manganese oxide, thereby suppressing the decline in the structural stability of the spinel-type lithium manganese oxide and the dissolution of manganese ions.

The results of Embodiments 1 to 5 show that the varying $LiMnO_2$ content affects the $I_A/I_B$ value and leads to a change in $n_{Li}/n_{Mn}$, thereby affecting the gravimetric discharge capacity, cycle performance, and safety performance of the lithium-ion battery. With the increase of the content of the $LiMnO_2$ material, the $I_A/I_B$ ratio and the $n_{Li}/n_{Mn}$ ratio increase, the gravimetric capacity increases, and the cycle performance is higher. When the $I_A/I_B$ ratio reaches 0.19, although the cycle performance continues to improve, the gravimetric discharge capacity stops increasing, and the lithium plating area increases during low-temperature charging of the lithium-ion battery, thereby impairing the safety performance of the lithium-ion battery.

The results of Embodiments 6 to 10 show that the change of Al content in the $LiMnO_2$ material affects the structural stability of the $LiMnO_2$ material. The higher the Al content, the more stable the structure, the narrower the full-width-at-half-maximum of the corresponding first diffraction peak, and the higher the cycle performance. In Embodiments 6 to 9, the $W_A/W_B$ ratio falls within the range of 1.05 to 1.56, and therefore, the cycle performance is more excellent.

The results of Embodiments 11 to 15 show that, with the increase of the CB value, the gravimetric discharge capacity increases, and the cycle performance declines. When the CB value is relatively small, the lithium plating area increases during low-temperature charging of the lithium-ion battery, thereby impairing the safety performance. Therefore, the lithium-ion batteries with a CB value falling within the range of 1.01 to 1.2 achieve excellent safety performance in addition to an increased gravimetric capacity and improved cycle performance.

The foregoing embodiments merely illustrate several implementations of this application to facilitate a person skilled in the art to understand the details of the technical solutions of this application, but are not hereby meant to be any limitation on the protection scope of this application. It is hereby noted that several variations and improvements, which may be made to the embodiments by a person of ordinary skill in the art without departing from the concept of this application, fall within the protection scope of this application.

**Claims**

1. An electrochemical device, comprising a positive electrode plate, wherein the positive electrode plate comprises a positive active material layer, **characterized in that**, when the electrochemical device is in a fully discharged state, an X-ray diffraction pattern of the positive active material layer exhibits a first diffraction peak and a second diffraction peak in a range of 17.8° to 19.2°, and a diffraction angle of the first diffraction peak is smaller than a diffraction angle of the second diffraction peak.

2. The electrochemical device according to claim 1, **characterized in that**, a peak intensity of the first diffraction peak is $I_A$, and a peak intensity of the second diffraction peak is $I_B$, satisfying: $0.01 \leq I_A/I_B \leq 0.2$.

3. The electrochemical device according to claim 2, **characterized in that**, $0.03 \leq I_A/I_B \leq 0.12$.

4. The electrochemical device according to claim 1, **characterized in that**, at least one of the following conditions is satisfied:

(1) a difference between the diffraction angle of the second diffraction peak and the diffraction angle of the first diffraction peak is less than or equal to 1°;
(2) a full-width-at-half-maximum of the first diffraction peak is $W_A$, and a full-width-at-half-maximum of the second diffraction peak is $W_B$, satisfying: $1 \leq W_A/W_B \leq 2$.

5. The electrochemical device according to claim 4, **characterized in that**, $1.05 \leq W_A/W_B \leq 1.56$.

6. The electrochemical device according to claim 1, **characterized in that**, the positive active material layer contains a first lithium manganese oxide with a spinel structure, and satisfies at least one of the following conditions:

   (a) the X-ray diffraction pattern of the positive active material layer exhibits a third diffraction peak in a range of 35° to 37°, and exhibits a fourth diffraction peak in a range of 43° to 45°;
   (b) the first lithium manganese oxide contains M element and Mn element, the M element comprises at least one of Al, Cr, Nb, Mg, Ti, V, Cu, Zr, Mo, La, Zn, Ga, Ru, Ag, Sn, Au, Ce, Pr, Nd, Sm, Gd, Fe, Co, Ni, W, or Y, and a molar ratio between the M element and Mn element in the first lithium manganese oxide is (0.0001 to 0.1): 1;
   (c) the first lithium manganese oxide comprises $Li_{x1}Mn_{y1}M_{z1}O_{4-t}A_t$, wherein $0.6 \leq x1 \leq 1.2$, $1.8 \leq y1 \leq 2$, $0 \leq z1 \leq 0.2$, $0 \leq t \leq 0.5$, M comprises at least one of Al, Cr, Nb, Mg, Ti, V, Cu, Zr, Mo, La, Zn, Ga, Ru, Ag, Sn, Au, Ce, Pr, Nd, Sm, Gd, Fe, Co, Ni, W, or Y, and A comprises at least one of S, N, F, Cl, or Br; or
   (d) the positive active material layer further comprises a second lithium manganese oxide, and the second lithium manganese oxide comprises secondary particles agglomerated from layer structured primary particles.

7. The electrochemical device according to claim 6, **characterized in that**, the second lithium manganese oxide satisfies at least one of the following conditions:

   (1) the second lithium manganese oxide comprises Al element, Mn element, and optional Q element, wherein the Q element comprises at least one of Cr, Nb, Ti, Mg, V, Cu, Zr, Mo, La, Zn, Ga, Ru, Ag, Sn, Au, Ce, Pr, Nd, Sm, Gd, Fe, Co, Ni, W, or Y; a molar ratio between Al element and Mn element in the second lithium manganese oxide is (0.0001 to 0.1): 1; and a molar ratio between the Q element and Mn element in the second lithium manganese oxide is (0 to 0.1): 1;
   (2) the second lithium manganese oxide comprises $Li_{x2}Mn_{y2}Al_{z2}Q_qO_2$, wherein $0.1 \leq x2 \leq 1.1$, $0.9 \leq y2 \leq 1$, $0 \leq z2 \leq 0.1$, $0 \leq q \leq 0.1$, and Q comprises at least one of Cr, Nb, Ti, Mg, V, Cu, Zr, Mo, La, Zn, Ga, Ru, Ag, Sn, Au, Ce, Pr, Nd, Sm, Gd, Fe, Co, Ni, W, or Y.

8. The electrochemical device according to claim 1, **characterized in that**, the electrochemical device further comprises a negative electrode plate, and the negative electrode plate comprises a negative active material layer; an area of the positive active material layer is $S_c$, and an area of the negative active material layer is $S_a$; in a first test area $S_1$ of the positive active material layer, a molar content of lithium is $n_{Lic}$, and a molar content of manganese is $n_{Mn}$; in a second test area $S_2$ of the negative active material layer, a molar content of lithium is $n_{Lia}$, wherein $S_2 = S_1 \times S_a/S_c$, $n_{Li} = n_{Lic} + n_{Lia}$, satisfying: $0.54 \leq n_{Li}/H_{Mn} \leq 0.65$.

9. The electrochemical device according to claim 1, **characterized in that**, the electrochemical device further comprises a negative electrode plate, and the negative electrode plate comprises a negative active material layer; an area of the positive active material layer is $S_c$, and an area of the negative active material layer is $S_a$; when a button half-cell is assembled by using the positive electrode plate with a test area $S_{tc}$ and using lithium metal as a counter electrode, a capacity of the positive electrode plate is $C_{tc}$ as tested at a current of 0.2C in a voltage range of 3 V to 4.3 V; and, when a button half-cell is assembled by using the negative electrode plate with a test area $S_{ta}$ and using lithium metal as a counter electrode, a capacity of the negative electrode plate is $C_{ta}$ as tested at a current of 0.2C in a voltage range of 2 V to 0.005 V, wherein

$$CB = (C_{ta} \times S_a/S_{ta})/(C_{tc} \times S_c/S_{tc}), \text{ satisfying: } 0.97 \leq CB \leq 1.35.$$

10. The electrochemical device according to claim 9, **characterized in that**, $1.01 \leq CB \leq 1.2$.

11. The electrochemical device according to claim 8 or 9, **characterized in that**, the negative active material layer comprises a negative active material, and the negative active material comprises at least one of graphite, a silicon material, a silicon-oxygen material, a silicon-carbon composite, or a silicon alloy.

12. An electrical device, **characterized in that**, the electrical device comprises the electrochemical device according to any one of claims 1 to 11.

FIG. 1

FIG. 2

FIG. 3

## INTERNATIONAL SEARCH REPORT

| International application No. |
| --- |
| **PCT/CN2022/103118** |

### A. CLASSIFICATION OF SUBJECT MATTER

H01M 4/50(2010.01)i; H01M 10/052(2010.01)i; H01M 10/058(2010.01)i

According to International Patent Classification (IPC) or to both national classification and IPC

### B. FIELDS SEARCHED

Minimum documentation searched (classification system followed by classification symbols)

H01M

Documentation searched other than minimum documentation to the extent that such documents are included in the fields searched

Electronic data base consulted during the international search (name of data base and, where practicable, search terms used)

CNTXT; ENTXT; ENTXTC: LiMnO2, 亚锰酸锂, 层状锰酸锂, 层, 锰酸锂, 锂锰氧, LiMn2O4, 尖晶石, 衍射, XRD, lithium manganite?, lithium manganese oxide, diffraction?, LixMnO2

### C. DOCUMENTS CONSIDERED TO BE RELEVANT

| Category* | Citation of document, with indication, where appropriate, of the relevant passages | Relevant to claim No. |
| --- | --- | --- |
| X | CN 102751482 A (SICHUAN UNIVERSITY) 24 October 2012 (2012-10-24) <br> description, paragraphs 3-5 and 8-15 | 1-2, 6-12 |
| A | CN 101780983 A (BYD CO., LTD.) 21 July 2010 (2010-07-21) <br> entire document | 1-12 |
| A | CN 1731600 A (GUANGZHOU RESEARCH INSTITUTE OF NON-FERROUS METALS) 08 February 2006 (2006-02-08) <br> entire document | 1-12 |
| A | CN 113823770 A (INSTITUTE OF PHYSICS, CHINESE ACADEMY OF SCIENCES) 21 December 2021 (2021-12-21) <br> entire document | 1-12 |
| A | JP 2020087638 A (TOYOTA CENTRAL R&D LABS INC. et al.) 04 June 2020 (2020-06-04) <br> entire document | 1-12 |
| A | US 2015214540 A1 (SAMSUNG SDI CO., LTD.) 30 July 2015 (2015-07-30) <br> entire document | 1-12 |

☐ Further documents are listed in the continuation of Box C.    ☑ See patent family annex.

| | |
| --- | --- |
| \* Special categories of cited documents: <br> "A" document defining the general state of the art which is not considered to be of particular relevance <br> "E" earlier application or patent but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search | Date of mailing of the international search report |
| --- | --- |
| **11 October 2022** | **28 January 2023** |

| Name and mailing address of the ISA/CN | Authorized officer |
| --- | --- |
| **China National Intellectual Property Administration (ISA/CN)** <br> **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
**Information on patent family members**

International application No.

**PCT/CN2022/103118**

| Patent document cited in search report | | | Publication date (day/month/year) | Patent family member(s) | | | Publication date (day/month/year) |
|---|---|---|---|---|---|---|---|
| CN | 102751482 | A | 24 October 2012 | CN | 102751482 | B | 03 December 2014 |
| CN | 101780983 | A | 21 July 2010 | None | | | |
| CN | 1731600 | A | 08 February 2006 | CN | 1326261 | C | 11 July 2007 |
| CN | 113823770 | A | 21 December 2021 | None | | | |
| JP | 2020087638 | A | 04 June 2020 | None | | | |
| US | 2015214540 | A1 | 30 July 2015 | KR | 20150089389 | A | 05 August 2015 |

Form PCT/ISA/210 (patent family annex) (January 2015)